# EUROPÄISCHE PATENTSCHRIFT

(11) **EP 1 567 738 B1**
(45) Veröffentlichungstag und Bekanntmachung des Hinweises auf die Patenterteilung: **07.05.2008**
(21) Anmeldenummer: 04711587.8
(22) Anmeldetag: 17.02.2004
(51) Int. Cl.: E05B 65/19, B60R 21/34

(54) **MOTORHAUBENSCHLOSS FÜR KRAFTFAHRZEUGE**
ENGINE HOOD LOCK FOR MOTOR VEHICLES
SERRURE DE CAPOT DE MOTEUR POUR VEHICULES AUTOMOBILES

(30) Priorität: 18.02.2003 DE 10306605
(43) Veröffentlichungstag der Anmeldung: 31.08.2005
(73) Patentinhaber: ISE Innomotive Systems Europe GmbH, 51702 Bergneustadt (DE)
(72) Erfinder: HARTEBRODT, Raphael, 57489 Drolshagen (DE); PRACEJUS, Achim, 51588 Nümbrecht (DE); RÖHNER, Stephan, 44287 Dortmund (DE)
(74) Vertreter: Fuchs
(86) Internationale Anmeldenummer: PCT/EP2004/001470
(87) Internationale Veröffentlichungsnummer: WO 2004/074610

(56) Entgegenhaltungen:
- DE-A- 10 034 523
- DE-A- 19 721 565
- DE-A- 19 923 703
- DE-A- 19 957 868
- US-A- 4 892 340

## Beschreibung

Die Erfindung bezieht sich auf eine Vorrichtung zum Verschließen der Fronthaube eines Kraftfahrzeuges, mit einem frontseitigen Haubenschloß, das ein manuell betätigbares Schlosselement für eine lösbare mechanische Wirkverbindung mit einem Schließelement an der Fronthaube aufweist.

Fronthauben, d.h. typischerweise Motorhauben von Kraftfahrzeugen, insbesondere Personenkraftwagen, sind im allgemeinen in einem Schloß, das sich im vorderen Teil der Karosserie des Vorderwagens befindet, lösbar mechanisch gehalten. Hierzu sind eine Vielzahl von Konstruktionen bekannt geworden, denen jedoch gemeinsam ist, dass sie zum Öffnen im Servicefall manuell mittels eines Bowdenzuges entriegelt werden. Dazu ist typischerweise frontseitig im Innenraum des Fahrzeuges ein Hebel angebracht, der über den Bowdenzug, der durch den Motorraum verlegt ist, mit dem Haubenschloß in mechanischer Verbindung steht.

Dieses Konstruktionsprinzip hat sich zwar in vielen Jahren bewährt, jedoch stellt der lange Bowdenzug im offenen Motorraum eine Problemzone dar, und auch die Betätigung des Hebels bedarf, da der Hebelarm aus Platzgründen kleingehalten werden muß, einer nicht unerheblichen Kraftanstrengung, zumal sie nur durch einzelne Finger der Hand aufgebracht werden muß. Ferner ist es bei der bekannten Haubenaufstellung im Servicefall nicht ohne weiteres möglich, den neueren Anforderungen eines Fußgängerschutzes durch sensorgesteuertes Aufstellen der Motorhaube bei Kollisionsgefahr (aktive Motorhaube) gerecht zu werden.

So beschreibt die ältere Patentanmeldung DE-A-102 43 497 eine Vorrichtung, bei der ein übliches mechanisches Haubenschloß auf einem Schlossträger befestigt ist, der seinerseits in einem fahrzeugfesten Gehäuse linear aufstellbar gehaltert ist, derart, dass im Normalzustand der Schlossträger niedergehalten ist und im Kollisionsfall sensorbetätigt für eine begrenzte Aufstellbewegung freigebbar ist. Diese Konstruktion lässt daher das Haubenschloß unverändert und sieht eine getrennte Aktuatorik zum Aufstellen des gesamten Haubenschlosses bei verriegelter Motorhaube vor.

Ein solches mechanisches Haubenschloß ist weiterhin aus den Dokumenten DE-A-19957868 und DE-A-19721565 bekannt.

Der Erfindung liegt die Aufgabe zugrunde, die eingangs bezeichnete Vorrichtung hinsichtlich des Haubenschlosses so auszubilden, dass eine leichtere Handhabung der Serviceentriegelung der Motorhaube gegeben ist und eine sensorgesteuerte Crash-Entriegelung der Motorhaube integriert ist.

Die Lösung dieser Aufgabe gelingt bei einer Vorrichtung zum Verschließen der Fronthaube eines Kraftfahrzeuges, mit mindestens einem frontseitigen Haubenschloß, das ein manuell betätigbares Schlosselement für eine lösbare mechanische Wirkverbindung mit einem Schließelement an der Fronthaube aufweist, wobei zur entriegelnden Betätigung des Schlosselementes diesem ein elektromagnetischer Aktuator mit einer elektrischen Steuerung zugeordnet ist, die eingangsseitig mit einem manuell betätigbaren Steuerelement für eine Entriegelung im Servicefall und einem Sensor für eine Entriegelung im Kollisionsfall mit einer Person verbunden ist, gemäß der Erfindung dadurch, dass das Haubenschloß neben dem zugeordneten Aktuator eine elektromotorische Antriebseinheit zur Verstellung in der Vertikalen aufweist.

Der elektromagnetische Aktuator ermöglicht eine einfache manuelle Entriegelung durch Betätigen einer Taste am Amaturenbereich, die den Aktuator mit der Bordnetzspannung beaufschlagt. Er ermöglicht ferner zusammen mit der elektromtorischen Antriebseinheit, dass auf einfache Weise eine sensorgesteuerte Crash-Entriegelung im Sinne des geforderten Personenschutzes integrierbar ist.

Zur Unterstützung der Aufstellung der Fronthaube weist gemäß einer Ausgestaltung der Erfindung die Vorrichtung mindestens eine im Frontbereich der Karosse des Kraftfahrzeuges anbringbare Federanordnung auf, die so ausgelegt ist, dass sie in montiertem Zustand, im geschlossenen Zustand der Fronthaube vorgespannt ist, wobei im Interesse einer gleichmäßigen Kraftverteilung die Vorrichtung vorzugsweise zwei mit breiter Basis quer über die Fronthaube anbringbare Federanordnungen aufweist.

Zur Begrenzung der Aufstellung der Fronthaube weist die Vorrichtung gemäß einer weiteren Ausgestaltung der Erfindung mindestens einen im Frontbereich des Kraftfahrzeuges an der Motorhaube anbringbaren manuell lösbaren Fanghaken mit einem zugeordneten, an der Fahrzeug-Karosse anbringbaren Widerlager auf.

Im Interesse einer gleichmäßigen Lastverteilung sind vorzugsweise zwei quer zur Fahrzeuglängsachse beabstandet anbringbare Haubenschlösser vorgesehen.

Da die Entriegelung durch den elektromechanischen Aktuator und die Verstellung des Haubenschlosses durch den elektromotorischen Antrieb einen inneren Sachzusammenhang besitzen, ist die Vorrichtung so ausgebildet, dass die elektromotorische Antriebseinheit des Haubenschlosses mit der elektrischen Steuerung des elektromechanischen Aktuators verbunden ist. Dadurch vereinfacht sich der steuerungstechnische Aufwand und die Unterbringung der Steuerung im elektrischen Gesamtsystem.

Eine vom Bauraum her günstige Unterbringung der elektromotorischen Antriebseinheit lässt sich gemäß einer Weiterbildung der Erfindung erzielen, wenn die elektromotorische Antriebseinheit durch einen Elektromotor mit horizontaler Antriebsachse mit einem nachgeschalteten Schneckengetriebe mit vertikaler Spindel-Abtriebsachse gebildet ist, wobei die Spindel einen Gewindeabschnitt besitzt, der im Gewindeeingriff mit einer zentrischen Gewindebohrung in einem zylindrischen Träger für das Haubenschloß mit Aktuator steht.

Konstruktiv lässt sich die Unterbringung der Antriebseinheit vorteilhaft bewirken, wenn der Elektromotor mit Schneckengetriebe in einem Gehäusesockel und die Gewindespindel in einem Sockelaufsatz untergebracht sind, wobei der zylindrische Träger in dem Sockelaufsatz linear verschiebbar aufgenommen ist. Dabei ist es zweckmäßig, wenn Anschläge zur Begrenzung der Aufstellbewegung des zylindrischen Trägers vorgesehen sind.

Der elektromagnetische Aktuator lässt sich vom Aufwand her und hinsichtlich einer sicheren Wirkverbindung zum Schlosselement im Haubenschloß besonders vorteilhaft realisieren, wenn als elektromagnetischer Aktuator ein Elektromagnet mit einem Anker zur Wirkverbindung mit dem Schlosselement vorgesehen ist. Derartige Aktuatoren sind im Handel erhältlich, so dass keine spezielle Konstruktion notwendig ist.

Anhand eines in den Zeichnungen dargestellten Ausführungsbeispieles wird die Erfindung näher erläutert.

Es zeigen:
- Fig. 1: in einer schematisierten Schnitt-Darstellung den Vorderwagen eines PKW mit der erfindungsgemäßen Vorrichtung zum Verschließen der Fronthaube des PKW in einer Gesamtansicht,
- Fig. 2: eine Draufsicht auf die Fronthaube nach Fig. 1 unter Darstellung der Lage der Komponenten der ' erfindungsgemäßen Schließ-Vorrichtung,
- Fig. 3: in einer Längsschnitt-Darstellung das Haubenschloß nach Fig. 1 mit zugehörigem elektromagnetischen Aktuator zur Entriegelung und elektromotorischem Antriebssystem zum vertikalen Verstellen des Haubenschlosses, und
- Fig. 4: in einer Schnittdarstellung eine Federanordnung nach Fig. 1 zur Unterstützung der Aufstellung der Fronthaube.

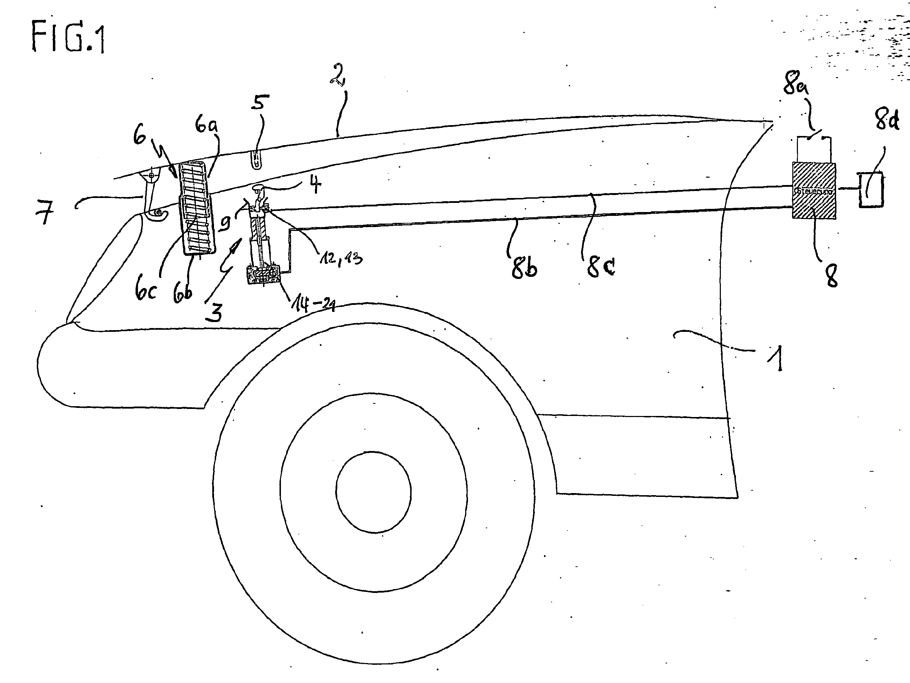

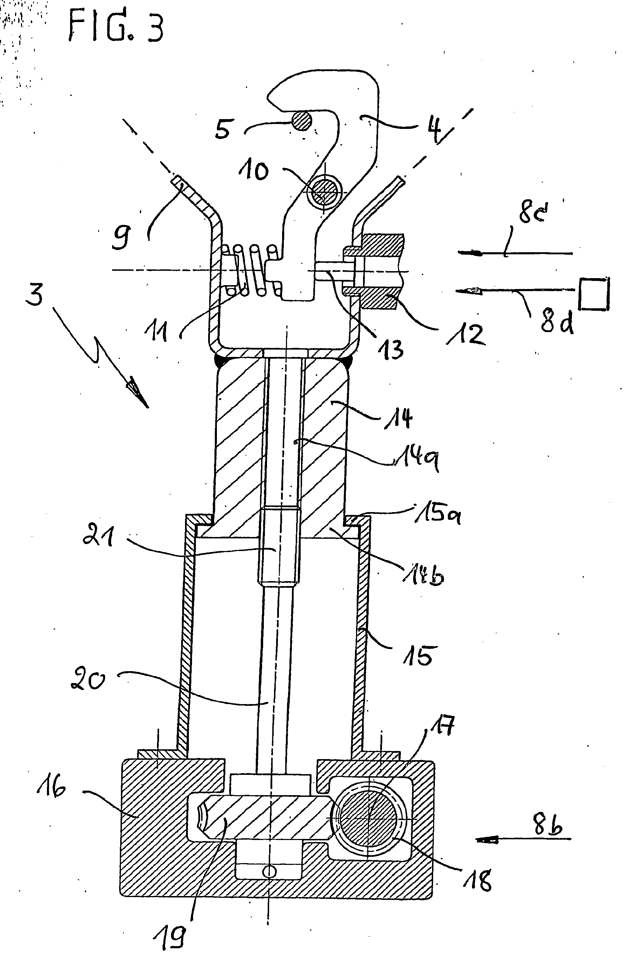

Die Fig. 1 zeigt in einer schematischen Darstellung den Vorderwagen eines Personenkraftwagens mit seiner motorraumseitigen Karosserie 1 und seiner Motorhaube 2 im aufgestellten Zustand. An der Karosserie 1 ist ein neuartiges aufstellbares Motorhaubenschloß 3 angebracht, dessen Aufbau in Fig. 3 näher dargestellt ist. Dieses Motorhaubenschioß 3 besitzt im dargestellten Ausführungsbeispiel im Schließteil eine hakenförmige Halteklinke 4, die in lösbarem Wirkeingriff mit einem bügelartig an der Motorhaube befestigten Haltebolzen 5 bringbar ist.

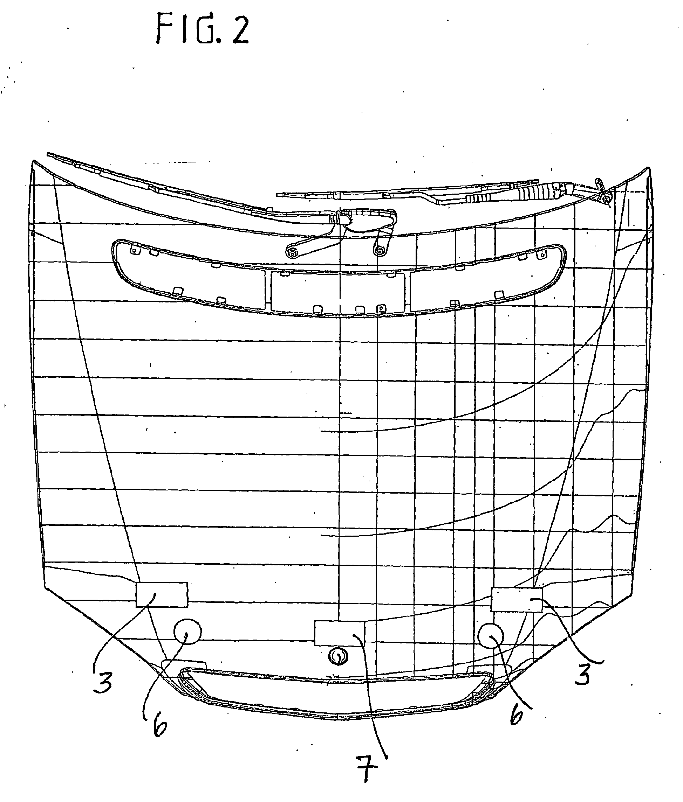

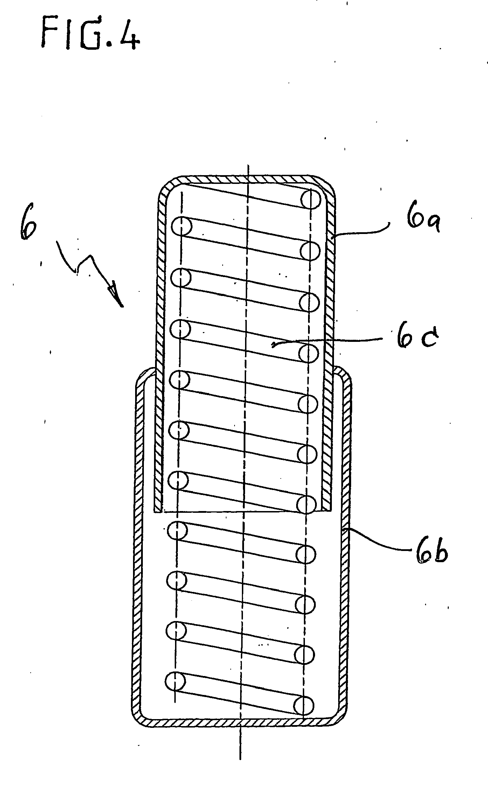

Zum selbsttägigen Aufstellen der Motorhaube 2 beim Entriegeln des Haubenschlosses dient eine teleskopartig ausfahrbare Spiralfederanordnung 6, die in Fig. 4 näher dargestellt ist. Sie besitzt zwei gegeneinander verschiebbare Rohre 6 a, 6 b, in denen eine Spiralfeder 6 c angeordnet ist. Das Rohr 6 b ist karosseriefest angebracht, wogegen das Rohr 6 a frei beweglich ist und mit der Motorhaube in Wirkeingriff treten kann. Die Figuren 1 und 3 zeigen dabei die Feder 6 c im weitgehend entspannten Zustand bei aufgestellter Motorhaube 2. Wird die Motorhaube in den geschlossenen Zustand zurückgebracht, wird die Feder 6 c zusammengedrückt, d.h. wieder vorgespannt. Im Interesse einer gleichmäßigen Lastverteilung sind dabei ebenfalls zwei Federanordnungen 6 vorgesehen, wie die Fig. 2, in der die Motorhaube in Draufsicht dargestellt ist, zeigt. Ebenso sind, entsprechend beabstandet, zwei Motorhaubenschlösser 3 vorgesehen.

Darüber hinaus ist ein Fanghaken 7 an der Motorhaube 2 angebracht, der den Aufstellweg begrenzt und manuell zum vollständigen Öffnen der Motorhaube manuell entriegelbar ist.

Im Innern des Kraftfahrzeuges ist eine Steuerung 8 mit einer armaturseitigen Drucktaste 8 a und mit den Motorhaubenschlössern führenden elektrischen Leitungen 8 b, 8 c zum Betätigen der Motorhaubenschlösser 3 angebracht. Alternativ zur manuell betätigbaren Drucktaste 8 a kann die Steuerung auch von einem Sensor (8 d) aktiviert werden.

Das neuartige Haubenschloss 3, das in der Fig. 3 im verriegelten Zustand näher dargestellt ist, besitzt jeweils kopfseitig eine sich nach oben erweiternde Einführöffnung 9, innerhalb der die Halteklinke 4 drehbar um eine Achse 10 angelenkt ist, wobei eine Feder 11 die Halteklinke im verriegelnden Sinne vorspannt. An der Einführöffnung ist ein elektromagnetischer Aktuator in Form eines Auslösemagneten 12 mit einem Stößel 13, der am unteren Arm der Halteklinke 4 anliegt, angebracht, der über die Leitung 8 c aktivierbar ist, indem der Auslösemagnet 12 mit der Bordspannung beaufschlagt wird.

Die einstufige Verriegelung mit nur einer Halteklinke ist nur als eines von vielen möglichen Verriegelungsbeispielen zu sehen. Mit Vorteil kann auch ein 3-Klinken-Aktuator nach der DE 198 21 594 A1 Anwendung finden; auf die entsprechende Offenbarung in dieser Schrift wird hiermit Bezug genommen. Wird der Auslösemagnet 12 aktiviert, dann wird der Stößel 9 nach links ausgetrieben und verschwenkt die Halteklinke 4 gegen die Kraft der Vorspannfeder 11 im entriegelnden Sinne und der Haltebolzen 5 der Motorhaube 2 wird freigegeben.

Das Haubenschloß mit seiner Einführöffnung 9 ist jeweils mit einem zylindrischen Gewindestück 14 verbunden, insbesondere verschweißt, das eine axiale, zentrische Gewindebohrung 14 a und einen umlaufenden Bund 14 b aufweist. Dieses Gewindestück 14 ist in einem zylindrischen Sockelaufsatz 15, der einen oberen abgekröpften Rand 15 a besitzt, axial verschiebbar aufgenommen, wobei der Rand 15 a; wie dargestellt, die axiale Verschiebbarkeit des Gewindestückes 14 nach oben begrenzt.

Das Haubenschloß 3 besitzt jeweils ferner einen Sockel 16, auf dem der Sockelträger 15 aufgeschraubt ist, und der einen Elektromotor mit seiner Antriebswelle 17, und eine darauf befestigte Schnecke 18 mit zugehörigem Getriebe 19 aufnimmt. Die Abtriebswelle des Getriebes ist mit einer Spindel 20 gekoppelt, die einen Gewindeabschnitt 21 aufweist, der im Wirkeingriff mit der Gewindebohrung 14 a steht.

Wird nun der Elektromotor über die Leitung 8 b mit der Bordnetzspannung versorgt, dreht er sich, wodurch sich auch die Spindel 20 mit ihrem Gewindeabschnitt 21 dreht und dabei durch den Gewindeeingriff mit der Gewindebuchse 14 diese - und damit auch das Haubenschloß - axial verschiebt, je nach Drehrichtung des Elektromotors. In Fig. 3 ist dabei der ausgefahrene Zustand der Gewindebuchse 14 dargestellt. Beim Aktivieren des Motors fährt dann der Gewindeabschnitt 21 in die Gewindebohrung 14 a ein und zieht die Gewindebuchse 14 nach unten in die Ausgangsstellung. Die Höhe des Sockelträgers 15 bestimmt dabei den möglichen Verstellweg.

Das erfindungsgemäße Haubenschloß arbeitet wie folgt:

In der Grundstellung, in der die Gewindebuchse 14 nach unten gefahren ist und auf dem Sockel 16 aufsitzt und in der die Halteklinke 4 mit dem Haltebolzen 5 verriegelt ist, hält das Schloß die Motorhaube 2, die durch die zwei Federanordnungen 6 vorgespannt ist, in der unteren, geschlossenen Position.

Das erfindungsgemäße Haubenschloß hat dabei zwei Funktionen, nämlich die übliche Serviceentriegelung, um einen Zugang zu dem Motorraum zu gewährleisten, und die Crashentriegelung, um im Kollisionsfall im Sinne des geforderten Fußgängerschutzes die Motorhaube um einen vorgegebenen Hub aufzustellen ("naktive Motorhaube") sowie die Aufstellung zu reversieren.

### 1. Serviceentriegelung

Die Serviceentriegelung wird durch Betätigen des Aktivierungsschalters 8 a, wobei die Steuerung 8 so geschaltet ist, dass dies nur bei Fahrzeugstillstand möglich ist, eingeleitet. Hierdurch wird über die Leitung 8 b der elektromotorische Verstellantrieb aktiviert und die beiden Motorhaubenschlösser mit der noch verriegelten Motorhaube 2 in die obere Position gebracht. Dieser Zustand ist in Fig. 3 dargestellt.

Bei dieser Aufstellung werden die Druckfedern 6 c teilweise entspannt. Nach Erreichen der oberen Position wird durch die Steuerelektronik 8 über die Leitung 8 c der elektrische Aktuator 12 der Motorhaubenschlösser aktiviert und die Motorhaube 2 für die Öffnung freigegeben. Dieser Zustand ist in Fig. 1 dargestellt. Der Fanghaken 7 wird danach manuell entriegelt und die Haube aufgestellt.

Das Schließen der Motorhaube erfolgt in umgekehrter Reihenfolge. Die Haube wird zunächst mit dem noch aufgestellten Schloß mittels des Fanghakens 7 verriegelt und nach der Betätigung des Schalters 8 a mittels des elektromotorischen Antriebs in die geschlossene Position gefahren.

### 2. Crashentriegelung

Die Crashentriegelung erfolgt durch eine geschwindigkeitsabhängige Nahfeld- bzw. Kontaktsensorik 8 d. Diese öffnet über den elektromagnetischen Aktuator 12 das jeweilige Motorhaubenschloß, das die Motorhaube 2 frei gibt, d.h. die Halterung zwischen Halteklinke 4 und Haltebolzen 5 wird aufgehoben. Durch die vorgespannten Federn wird die Motorhaube 2 in die obere Position; die durch die Fanghaken 7 begrenzt wird, aufgestellt.
In dieser Position ist die Haube 2 für einen ev. Aufprall aktiviert.

Bei einer ungewollten oder prophylaktischen Auslösung ohne Kollision oder nach einer Testauslösung muß die Aufstellung reversiert werden können. Dazu wird das jeweilige Motorhaubenschloß durch den Verstellmechanismus 17 bis 21 elektromotorisch ausgefahren, so dass die Klinke 4 des Schlosses mit dem Klinkenbügel 5 an der Haube in Eingriff kommt. Mittels des Antriebs werden dann Schloss 3 und Haube 2 in die Grundstellung zurückgefahren.

Durch die Erfindung wird eine Reihe von Vorteilen erzielt:
● Serviceentriegelung der Motorhaube durch Tastendruck und nicht durch Betätigungshebel, was eine leichtere Handhabung gewährleistet
● Öffnung der Motorhaube ist nur bei Stillstand des Fahrzeuges möglich (Sicherheit)
● Spaltmaßverringerung zwischen Motorhaube und Karosse durch kraftschlüssige Verriegelung in unterer Position
● Integration der Crashentriegelung für Fußgängerschutz in das Motorhaubenschloß, wobei gerade dem letzten Punkt eine maßgebende Bedeutung beikommt.

## Patentansprüche

1. Vorrichtung zum Verschließen der Fronthaube (2) eines Kraftfahrzeuges, mit mindestens einem frontseitigen Haubenschloß (3), das ein manuell betätigbares Schlosselement (4) für eine lösbare mechanische Wirkverbindung mit einem Schließelement (5) an der Fronthaube (2) aufweist, wobei zur entriegelnden Betätigung des Schlosselementes (4) diesem ein elektromagnetischer Aktuator (12, 13) mit einer elektrischen Steuerung (8) zugeordnet ist, die eingangsseitig mit einem manuell betätigbaren Steuerelement (8 a) für eine Entriegelung im Servicefall und einem Sensor (8 d) für eine Entriegelung im Kollisionsfall mit einer Person verbunden ist, **dadurch gekennzeichnet, dass** das Haubenschloß (3) neben dem zugeordneten Aktuator (12, 13) eine elektromotorische Antriebseinheit (14, 17 - 21) zur Verstellung in der Vertikalen aufweist.

2. Vorrichtung nach Anspruch 1, **gekennzeichnet durch** mindestens eine im Frontbereich des Kraftfahrzeuges anbringbare Federanordnung (6), die so ausgelegt ist, dass sie in montiertem Zustand, im geschlossenen Zustand der Fronthaube (2) vorgespannt ist.

3. Vorrichtung nach Anspruch 1 oder 2, **gekennzeichnet durch** mindestens einen im Frontbereich des Kraftfahrzeuges an der Motorhaube (2) anbringbaren, manuell lösbaren Fanghaken (7) mit einem zugeordneten, an der Fahrzeug-Karosse (2) anbringbaren Widerlager.

4. Vorrichtung nach einem der Ansprüche 1 bis 3, **dadurch gekennzeichnet, dass** die elektromotorische Antriebseinheit mit der elektrischen Steuerung (8) des elektromechanischen Aktuators verbunden ist.

5. Vorrichtung nach Anspruch 2 oder 3, 4, **gekennzeichnet durch** zwei beabstandet quer zur Längsachse des Kraftfahrzeuges anbringbare Federanordnungen (6).

6. Vorrichtung nach Anspruch 3 oder 4, 5, **gekennzeichnet durch** zwei quer zur Fahrzeuglängsachse beabstandet anbringbare Haubenschlösser (3).

7. Vorrichtung nach einem der Ansprüche 1 bis 6, **dadurch gekennzeichnet, dass** die elektromotorische Antriebseinheit des Haubenschlosses (3) durch einen Elektromotor mit horizontaler Antriebsachse (17) mit einem nachgeschalteten Schneckengetriebe (18, 19) mit vertikaler Spindel-Abtriebsachse (20) gebildet ist, wobei die Spindel (20) einen Gewindeabschnitt (21) besitzt, der im Gewindeeingriff mit einer zentrischen Gewindebohrung (14) in einem zylindrischen Träger (14) für das Haubenschloß (3) mit Aktuator (12) steht.

8. Vorrichtung nach Anspruch 7, **dadurch gekennzeichnet, dass** der Elektromotor (17) mit Schneckengetriebe (18, 19) in einem Gehäusesockel (16) und die Gewindespindel (20, 21) in einem Sockelaufsatz (15) untergebracht sind, wobei der zylindrische Träger (14) in dem Sockelaufsatz (15) linear verschiebbar aufgenommen ist.

9. Vorrichtung nach Anspruch 8, **dadurch gekennzeichnet, dass** Anschläge (14 b, 15 a) zur Begrenzung der Aufstellbewegung des zylindrischen Trägers (14) vorgesehen sind.

10. Vorrichtung nach einem der Ansprüche 1 bis 9, **dadurch gekennzeichnet, dass** als elektromagnetischer Aktuator (8) ein Elektromagnet mit einem Anker (13) zur Wirkverbindung mit dem Schlosselement (4) vorgesehen ist.

## Claims

1. Device for locking the front bonnet (2) of a motor vehicle, having at least one frontal bonnet lock (3), which comprises a manually operable lock element (4) for a releasable, mechanical, operative connection with a lock element (5) on the front bonnet (2), wherein, in order to unlock the lock element (4), an electromagnetic actuator (12, 13) having an electric control mechanism (8) is associated with the lock element, the input side of the control mechanism being connected to a manually operable control element (8a) for unlocking for maintenance purposes and to a sensor (8d) for unlocking in the event of collision with a person, **characterised in that**, in addition to the associated actuator (12, 13), the bonnet lock (3) comprises an electromotive drive unit (14, 17-21) for vertical adjustment.

2. Device according to claim 1, **characterised by** at least one spring arrangement (6) mountable in the frontal region of the motor vehicle, the spring arrangement being designed so that, in the mounted state, it is biased in the closed state of the front bonnet (2).

3. Device according to claim 1 or 2, **characterised by** at least one manually releasable catch hook (7) mountable in the frontal region of the motor vehicle on the engine bonnet (2), the catch hook having an associated abutment mountable on the vehicle body (2).

4. Device according to any one of claims 1 to 3, **characterised in that** the electromotive drive unit is connected to the electric control mechanism (8) of the electromechanical actuator.

5. Device according to claim 2 or 3, 4, **characterised by** two spring arrangements (6) mountable in spaced arrangement transversely to the longitudinal axis of the motor vehicle.

6. Device according to claim 3 or 4, 5, **characterised by** two bonnet locks (3) mountable in spaced arrangement transversely to the vehicle longitudinal axis.

7. Device according to any one of claims 1 to 6, **characterised in that** the electromotive drive unit of the bonnet lock (3) is formed by an electric motor having a horizontal drive shaft (17) with a downstream worm gear (18, 19) having a driven vertical spindle shaft (20), the spindle (20) having a threaded section (21), which is in threaded engagement with a central threaded bore (14) in a cylindrical support (14) for the bonnet lock (3) with the actuator (12).

8. Device according to claim 7, **characterised in that** the electric motor (17) with worm gear (18, 19) is housed in a housing base (16) and the threaded spindle (20, 21) is housed in a part (15) on top of the base, the cylindrical support (14) being received in the part (15) on top of the base (16) so as to slide linearly.

9. Device according to claim 8, **characterised in that** stops (14b, 15a) are provided to limit the upward movement of the cylindrical support (14).

10. Device according to any one of claims 1 to 9, **characterised in that** an electromagnet having an armature (13) for operative connection with the lock element (4) is provided as the electromagnetic actuator (8).

## Revendications

1. Dispositif pour fermer le capot avant (2) d'un véhicule automobile, comprenant au moins une serrure de capot (3) située côté avant, présentant un élément de serrure (4) actionnable manuellement pour une liaison fonctionnelle mécanique désolidarisable à un élément de fermeture (5) sur le capot avant (2), où, pour obtenir l'actionnement déverrouillant de l'élément de serrure (4), à celui-ci est associé un actionneur (12, 13) électromagnétique avec une commande (8) électrique, qui est reliée, côté entrée, à un élément de commande (8a) actionnable manuellement, pour assurer un déverrouillage en cas d'entretien, et un capteur (8d), pour assurer un déverrouillage en cas de collision avec une personne, **caractérisé en ce que** la serrure de capot (3) présente, outre l'actionneur (12, 13) associé, une unité d'entraînement (14, 17 à 21) à moteur électrique, pour la manoeuvre dans la direction verticale.

2. Dispositif selon la revendication 1, **caractérisé par** au moins un agencement à ressort (6) susceptible d'être introduit dans la zone avant du véhicule automobile, conçu de manière que, à l'état monté, il soit précontraint lorsque le capot avant (2) est à l'état fermé.

3. Dispositif selon la revendication 1 ou 2, **caractérisé par** au moins un crochet d'emprisonnement (7) désolidarisable manuellement, susceptible d'être monté dans la zone avant du véhicule automobile sur le capot moteur (2), avec un contre-palier associé, susceptible d'être monté sur la carrosserie du véhicule (2).

4. Dispositif selon l'une des revendications 1 à 3, **caractérisé en ce que** l'unité d'entraînement à moteur électrique est reliée à la commande électrique (8) de l'actionneur électromécanique.

5. Dispositif selon la revendication 2 ou 3, 4, **caractérisé par** deux agencements à ressort (6), susceptibles d'être montés à distance de l'axe longitudinal du véhicule automobile.

6. Dispositif selon la revendication 3 ou 4, 5, **caractérisé par** deux serrures de capot (3), susceptibles d'être montées à distance de l'axe longitudinal de véhicule.

7. Dispositif selon l'une des revendications 1 à 6, **caractérisé en ce que** l'unité d'entraînement à moteur électrique de la serrure de capot (3) est formée par un moteur électrique ayant un axe d'entraînement (17) horizontal avec une transmission à vis (18, 19) installée en aval et comprenant un axe de partie menée de broche (20) vertical, la broche (20) ayant un tronçon fileté (21), qui est en prise par filetage avec un perçage taraudé (14) centré, dans un support (14) cylindrique pour la serrure de capot (3) munie de l'actionneur (12).

8. Dispositif selon la revendication 7, **caractérisé en ce que** le moteur électrique (17), avec la transmission à vis (18, 19), est logé dans un socle de boîtier (16), et la broche filetée (20, 21) est logée dans un appendice de socle (15), le support (14) cylindrique étant logé de façon déplaçable linéairement dans l'appendice de socle (15).

9. Dispositif selon la revendication 8, **caractérisé en ce que** des butées (14b, 15a) sont prévues, pour limiter le déplacement de placement du support (14) cylindrique.

10. Dispositif selon l'une des revendications 1 à 9, **caractérisé en ce qu'**à titre d'actionneur (8) électromagnétique est prévu un électro-aimant, avec un induit (13) pour la liaison fonctionnelle avec l'élément de serrure (4).
